# EUROPEAN PATENT SPECIFICATION

(11) **EP 0 731 894 B1**
(45) Date of publication and mention of the grant of the patent: **19.08.1998**
(21) Application number: 95902011.6
(22) Date of filing: 01.12.1994
(51) Int. Cl.: F16L 59/02, B29D 23/00

(54) **PIPE INSULATION WITH ADHESIVE CLOSURE AND ITS METHOD OF PRODUCTION**
ROHRISOLATION MIT KLEBEVERSCHLUSS UND EIN VERFAHREN ZU DEREN HERSTELLUNG
ISOLANT DE TUYAU A FERMETURE ADHESIVE ET SON PROCEDE DE FABRICATION

(30) Priority: 01.12.1993 US 160097
(43) Date of publication of application: 18.09.1996
(73) Proprietor: INDUSTRIAL THERMO POLYMERS LIMITED, Mississauga, Ontario L5S 1R2 (CA)
(72) Inventor: HARTMAN, David, Tottenham, Ontario L0G 1W0 (US); HARTMAN, Steven, Erin, Ontario N0B 1T0 (CA); JEPSON, Robert, N., Georgetown, Ontario L7G 3H5 (CA)
(74) Representative: Brooks, Nigel Samuel
(86) International application number: PCT/CA94/00663
(87) International publication number: WO 95/15461

(56) References cited:
- EP-A- 0 152 393
- DE-A- 2 640 544
- DE-A- 3 536 086
- DE-U- 7 509 227
- DE-U- 9 205 551
- GB-A- 2 201 482
- US-A- 3 691 990
- US-A- 4 023 589
- US-A- 4 748 060
- PATENT ABSTRACTS OF JAPAN vol. 008 no. 140 (M-305) ,29 June 1984 & JP,A,59 038033 (SEKISUI KAGAKU KOGYO KK) 1 March 1984,

## Description

### FIELD OF THE INVENTION

The present invention relates to pipe insulation and in particular to pipe insulation having a longitudinal cut therein for application over a pipe and means for closing of the cut once the insulation has been applied to a pipe.

### BACKGROUND OF THE INVENTION

Various approaches have been proposed for effectively allowing the closure of pipe insulation by means of a closing tape attached to the pipe insulation adjacent a radial cut in the pipe insulation. One such structure is shown in United States Patent 4,584,217. In this case, a solvent-based adhesive tape has been applied to the pipe insulation and effectively closes the cut by bridging the pipe insulation on either side of the cut. The adhesive must also overcome the tendency of a pipe located interior to the insulation spreading the cut. Other arrangements have made use of an adhesive tape which adheres to the opposed faces of the cut, such that when the pipe insulation is pushed together to close the cut, the opposed faces adhesively engage and maintain the closed position.

EP-A-0 152 393 discloses a different method for applying an adhesive to an opposed wall at a longitudinal slit in pipe insulation. The pipe insulation is slit and manipulated to expose the opposed wall and the adhesive is then applied and covered with a removable film.

DE-A-35 36 086 discloses a similar method, but in this case, the pipe insulation is not slit through and adhesive and removable tape are applied to one of the faces in the groove.

The closure of pipe insulation is difficult, in that typically the pipe insulation is extruded using a foamed polyethylene type material and is subsequently slit.

The opposed faces of the slit are through the cell structure and adhesion to these surfaces is somewhat difficult when a preformed adhesive layer is applied to the surface. The other approach where a tape is secured to the outer skin of the pipe insulation is also difficult in practice due to poor adhesion of the tape to the extruded skin of the article and ready exposure of the tape to the elements.

Another problem is with respect to the ability to apply the tape to the pipe insulation in an effective manner at the time of extrusion. The product, when initially extruded, is of a certain diameter and length, and for a period of at least about 24 hours after extrusion, the product will continue to shrink. Shrinkage is typically in the order of 2%. It has therefore been the practice to produce the pipe insulation by extrusion, cut or partially cut the material to form a longitudinal slit, cut the extruded product to length and thereafter store the cut product for sufficient time to accommodate shrinkage. After shrinkage has occurred, an adhesive closing tape is applied to the article adjacent the longitudinal slit. Unfortunately, this prior art practice results in a two stage process with the tape being applied to the article only after the article has been stored for a certain period of time. It is certainly preferable to apply a tape when the pipe insulation is being produced, but application of a preferred adhesive multi-layer tape at this time typically results in wrinkling of the tape, possible poor adhesion of the tape to the product, and the appearance of an inferior product. Furthermore, the ability to perform this operation at manufacturing speeds is difficult and thus compounds the problem. Due to these problems, a multi-layer tape is normally manually applied to the pipe insulation as a separate stage after shrinkage is complete.

### SUMMARY OF THE INVENTION

According to the invention, an in-line method of producing pipe insulation is defined by the features of claim 1.

A pipe insulation produced by such a method is defined by the features of claim 11.

Preferably, the removable release film strip is a low density polyethylene applied in a low tensioned state, and preferably the pressure sensitive adhesive is a hot melt adhesive spray-applied or pumped to the foamed articles on the opposed walls.

In preferred embodiment the pressure sensitive adhesive is spray-applied to the pipe insulation.

In yet a further aspect of the invention the adhesive is a pressure sensitive hot melt adhesive which is initially at a temperature about or above the melt temperature of the foamed article and is sprayed on the product through an air gap and contacts the walls of the pipe insulation at a temperature about or slightly below the melt temperature of the pipe insulation. Spraying through the air gap partially cools the hot melt adhesive, which is sprayed in a narrow jet having a circular spray pattern. Spraying the adhesive at a temperature about the melt temperature of the foam insulation provides a strong bond or securement of the adhesive to the opposed walls without any appreciable thermal damage of the pipe insulation due to the much higher mass thereof.

According to an aspect of the invention the pressure sensitive hot melt adhesive is applied to opposed slit walls adjacent the slit. In this case the release substrate is centrally located in a V shape and the opposed walls are forced together against the V section to cover and protect the applied adhesive. The V section is subsequently cut into two parts, one for each of the opposed walls.

In a preferred embodiment the slit is a nonradial slit to increase the width of the opposed walls and improve adhesion properties of the final product.

The wall thickness of the pipe insulation can vary considerably, but is typically at least 0.64 cm (¼ of an inch). The slit exposes cells of the foamed product and these exposed cells have a greatly varying surface. The sprayed adhesive allows coating of this surface and forms a strong bond therewith. The adhesive also has good adhesion with itself to maintain the slit closed.

It has been found that a pressure sensitive adhesive can be matched to the material of the pipe insulation whereby effective application of the adhesive occurs when the product is in its initial larger shape and the applied adhesive can maintain a stressed, stretched condition of the film. With shrinkage, this stress is relieved and good coverage of the adhesive is obtained. Furthermore, product shrinkage may actually improve the bond of the adhesive with the product.

A suitable polypropylene based film or a suitable linear low density polyethylene based film which is easily stretched under relatively low loads allows the adhesive to maintain the stretched, condition of the film at application until it is subsequently relieved or partially relieved during shrinkage of the insulation. The film, the adhesive and the pipe insulation cooperate to maintain the initial stretched or stressed state of the film which is progressively, relieved as the product shrinks.
Furthermore, the thin film is very flexible and generally maintains coverage over the adhesive, even if some buckling of the film during shrinkage occurs.

With the method, the adhesive and film are applied in-line as the product is being extruded and at production speeds typical of conventional extruded foam pipe insulation without adhesive closure. This greatly simplifies manufacturing and packaging of the product, as it is completed at the time of manufacture and shrinkage can occur afterwards, as would be the case if the pipe insulation was manufactured without the adhesive closing arrangement. There is no requirement to reprocess the produced pipe insulation once shrinkage has been completed. The cost of the adhesive and applying thereof is low and the improvement to the product is high.

The method allows the application of the adhesive and release film at production speeds to the extruded product, which can be cut to length afterwards where the product and film are cut in a single step.

### BRIEF DESCRIPTION OF THE DRAWINGS

Preferred embodiments of the invention are shown in the drawings, wherein:
Figure 1A is a partial perspective view showing manufacture of the adhesively closable pipe insulation;
Figure 1B is a schematic of certain manufacturing steps;
Figure 2 is a sectional view showing the application of a pressure sensitive hot melt adhesive to the pipe insulation;
Figure 3 is a sectional view showing securement of a removable release substrate to the pipe insulation;
Figure 4 shows a sectional view of the pipe insulation with the releasable substrate applied thereto; and
Figure 5 shows the operation of cutting of the releasable substrate in a central location.

### DETAILED DESCRIPTION OF THE PREFERRED EMBODIMENTS

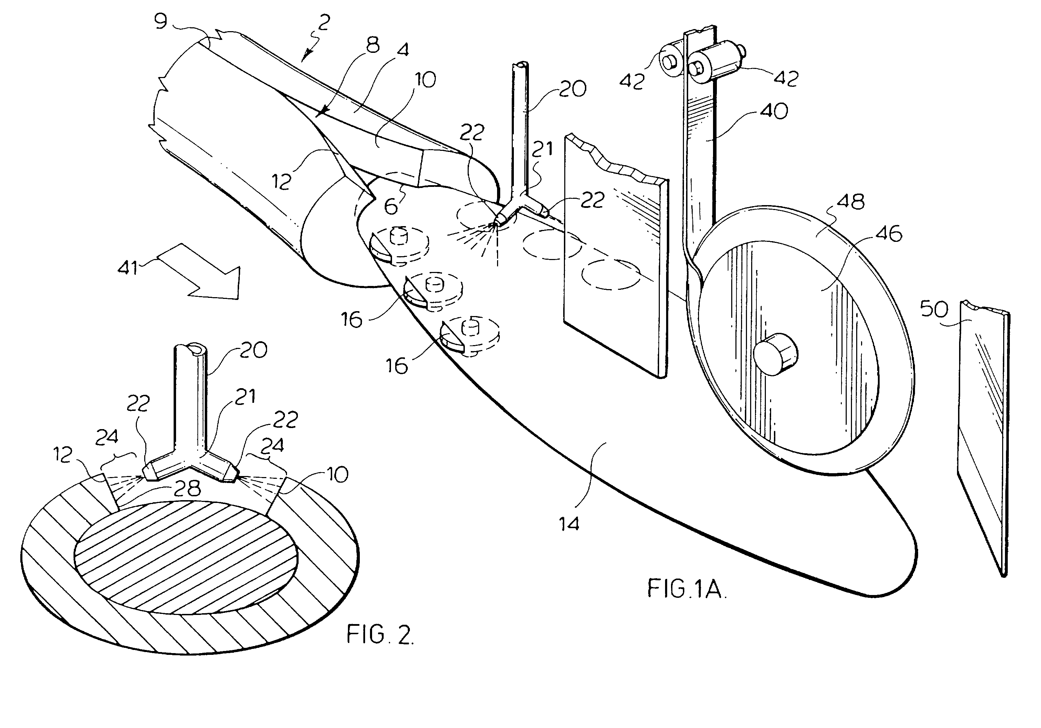

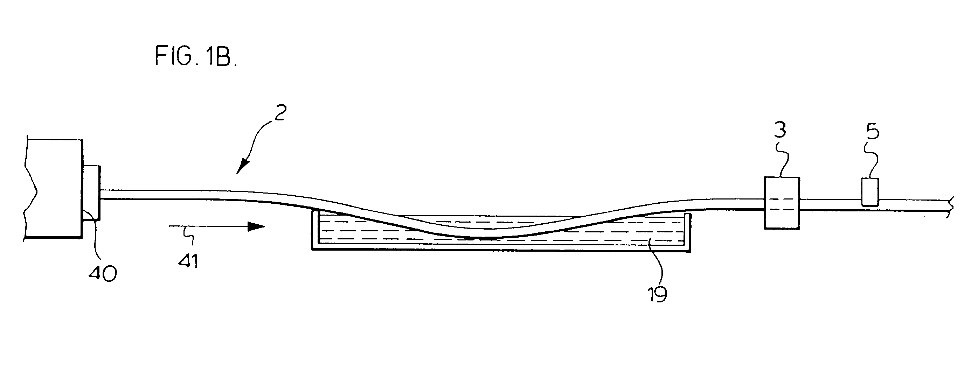

Foamed pipe insulation 2, preferably low density polyethylene pipe insulation, is extruded as illustrated in Figure 1A and 1B, and is shown exiting the die 40 with the product being extruded in the direction of the arrow 41. In actual practice, the pipe insulation as it exits the die 40 is quite hot and it is often water cooled (water bath 19) to remove heat from the extruded product (see Figure 1B). This water cooling would occur prior to slitting of the product to improve the stability of the cell structure. If water cooling is used, the pipe insulation 2 can be stripped of water, preferably with an air jet arrangement 3, prior to further processing of the product including the foam cutting station 5.

The polyethylene pipe insulation 2 has an outer peripheral wall 4 and an inner peripheral wall 6, which collectively define a hollow center 8. The pipe insulation typically has an outer and inner skin and is cellular between the inner and outer walls. Typically the cells are closed or predominantly closed cells, however, it is possible to make pipe insulation with open cells or a large percentage of open cells, if so desired. In any event, the outer peripheral wall 4 is the skin of the extruded product and this outer skin is difficult to adhere to for many adhesives. A longitudinal slit 9 is formed, exposing the cellular structure of the opposed walls 10 and 12. In many climates, it is desirable to positively close the slit after the pipe insulation has been installed about a pipe. This is particularly desirable where the insulation is outdoors and is exposed to the elements.

One suitable adhesive is manufactured by National Starch and Chemical Company and is sold under the DURO-TAK 4144 trademark. It is a hot melt pressure sensitive adhesive and has the following performance in addition to good initial bond for fast set-up requirements;

| | Polyester (2 mil) (0.05 mm) |
|---|---|
| 180° Peel (oz./in.) | |
| 20 minutes | 105 |
| 24 hours | 115 |
| | |

| Shear (hours) | |
|---|---|
| 4 psi @ 72°F | 24 |
| | |
| Tack (oz./sq.in.) | 100 |

A U.V. stabilizer may be added when required.

A further adhesive is manufactured by NACAN Products Limited, Brampton, Ontario, under the trademark DURO-TAK 4134. This thermoplastic pressure sensitive hot melt adhesive is a solid and tan in colour with a viscosity of 25,000 mPa.s @ 150°C
15,000 mPa.s @ 163°C
8,000 mPa.s @ 177°C
and a specific gravity of 0.94.

This adhesive is suitable with a large variety of surfaces, including paper, polyethylene and other plastics, glass, metals and inks. The adhesive has high tack for automatic label applications. This adhesive bonds well with polyethylene and polypropylene and is suitable for the present application. A U.V. stabilizer may be added when required.

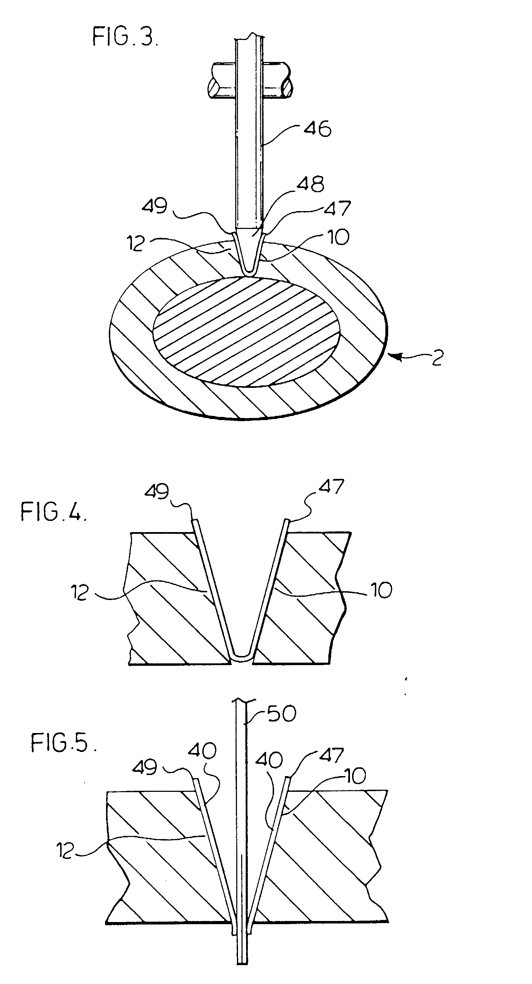

The pipe insulation 2, as shown in Figure 1A, is being fed in the direction 41 over the mandrel 14. The pipe insulation 2 is of a polyethylene foam material which has just been extruded and cooled sufficiently to allow handling thereof (see Figure 1B). It has an outer peripheral wall or skin 4 and inner peripheral wall or skin 6 about a hollow interior 8. The pipe insulation has been cut to form the longitudinal slit 9 running the length of the insulation. The slitting operation forms the opposed walls 10 and 12. The pipe insulation is guided over the mandrel 14 and the movement over the mandrel is assisted, in this case by rotatable wheels or bearings generally shown as 16. Other arrangements are possible for allowing the pipe insulation to move over the mandrel to spread the opposed wall sections 10 and 12, as indicated in Figure 2. The pipe insulation 2 is typically spread about 2.5 cm to 3.75 cm (1 to 1½ inches) and the wall thickness is at least about 0.64 cm (¼ of an inch) and is often 1.28 cm (½ inch) or more. The pipe insulation is spread to opposed wall sections 10 and 12 to the spray head 21, which is connected to the pressure sensitive hot melt adhesive supply 20, and feeds the pressure sensitive hot melt adhesive to the spray nozzles, indicated as 22. A spray of pressure sensitive hot melt adhesive is applied to the opposed walls 10 and 12 and the pressure sensitive hot melt adhesive is preferably at a temperature of about 163°C (325°F) when it exits the spray nozzles 22. The pressure sensitive hot melt adhesive cools as it passes through the air gap (approximately 1.27 cm (½ inch)), indicated as 24 in Figure 2, and strikes the opposed walls 10 and 12 at a temperature about the melting temperature of the pipe insulation. The pressure sensitive hot melt adhesive preferably has a melting temperature at least 11°C (20°F) above the melt temperature of the foamed polyethylene. The hot application of the adhesive to the walls 10 and 12 produces better adhesion than if an adhesive is applied cold to these surfaces. It can be appreciated that the insulation will act as a heat sink to the spray and strong adhesion is provided. The sprayed adhesive is able to coat the exposed cell walls, and thus, provide a good coverage to this area. The pipe insulation will cool the adhesive on contact and the temperatures and spray should be such that no appreciable thermal damage to the pipe insulation occurs. High temperatures described above provide strong securement of the adhesive to the pipe insulation.

The pipe insulation is still warm from the extrusion process and strong securement between the wall section and the adhesive is achieved. The strength of the securement is also improved due to the pocketed surface of the various cut cells of the pipe insulation. Therefore, the adhesive strongly adheres to the slit walls 10 and 12. Furthermore, the product is still subject to post-extrusion shrinkage in the order of about 2% in the product length, and therefore, coverage improves with shrinkage.

After the adhesive has been applied, the extruded product continues to move across the mandrel 14 towards the removable release film indicated as 40. This removable release film is preferably of a silicon coated, low strength polyethylene which can be easily elongated approximately 2% of its length by means of the drag of the film and the tensioning rollers 42. Other suitable release materials can also be used. In any event, the removable releasable film is brought into contact with the opposed walls 10 and 12 on the V wheel 46 and is heated by the adhesive and the pipe insulation. The film is generally centered on the V edge 48 of the V wheel and, at this point, the pipe insulation 2 is no longer being spread (see Figure 3) and opposed walls 10 and 12 are being urged into contact with the V edge 48, with the removable tape substrate 40 trained thereabout. As the extruded product continues to advance in the direction 41 immediately downstream of the V wheel 46, the product will be in the condition generally shown in Figure 4.

As illustrated in Figure 2, the adhesive is preferably only applied on approximately ¾ of the surface area of the opposed walls 10 and 12 and preferably is not applied to the edge of these walls immediately adjacent the mandrel. This provides a small safety margin and it has not been found necessary to fully coat these surfaces to provide effective securement thereof. In contrast, the removable release tape penetrates sufficiently to fully cover the inside edge of the adhesive while also forming two releasable tabs, generally indicated as 47 and 49 projecting above the pipe insulation. It can been seen that the film substrate is still joined centrally between the opposed walls 10 and 12. A knife, generally indicated as 50, serves to cut the removable release film 40, as indicated in Figure 5, to thereby form two removable release films, one for each of the opposed walls 10 and 12. The film preferably extends above the pipe insulation and slightly into the hollow cavity to fully cover the opposed walls.

As previously described, the user of the product merely forces the pipe insulation through slit 9, whereafter the removable release film 40 is removed from each of the opposed walls 10 and 12 and these walls are brought into contact to effect adhesive securement therebetween. It has.been found that this provides an excellent bond and it is also believed that the closed cell nature of the product assists in reducing degradation of the adhesive by oxygen. The adhesive preferably includes the appropriate compositions to reduce oxygen degradation. Both films can be removed together by gripping the releasable tabs and pulling on both.

As previously discussed, the extruded foam product will undergo shrinkage in its length, typically in the range of about 2%. It is for this reason that the removable tape substrate is tensioned approximately 2% and the removable release film is selected to require only minimal force to effect a 2% elongation. Furthermore, the release film can readily buckle, if necessary. In this way, the adhesive and the product does not need to oppose a large force and can easily maintain the film tensioned until such time as the product has undergone shrinkage, at which point the tensile force will be dissipated. By using this particular arrangement, the film effectively covers the respective opposed walls 10 and 12 and protects the adhesive. Pretensioning of the film reduces the extent of buckling, although some buckling may occur while still providing good protection of the underlying adhesive. The removable release film with the extending tabs 47 and 49 make it extremely convenient to remove these portions when the pipe insulation has been properly placed about a pipe.

The spray of the pressure sensitive hot melt adhesive against the walls of the pipe insulation forms a particularly strong bond due to the penetration of the adhesive into the exposed cells of the product as well as the high temperature application of the adhesive to the walls, which walls are also at an elevated temperature.

Spray-applying pressure sensitive hot melt adhesive onto the foam which itself is still quite warm, inserting the release film into the slit and squeezing the slit together onto the release film, results in a very good product that can be produced at speeds of conventional extrusion of this type of product.

It is believed the heat of the adhesive partially reduces the tensile force in the release film. The temperature of the film, adhesive and foam adjacent the opposed walls generally cool at the same rate, allowing the film and foam to shrink at the same rate and end up the same length when cooled or to at least provide effective coverage of the pressure sensitive adhesive to avoid contamination and to reduce deterioration due to contact with the air and/or dirt. This coverage is improved by having the film also being of low density polyethylene. The film serves to protect the adhesive from dirt and to maintain the adhesive in a state to effectively close the slit at the time of installation. Some buckling of the film can occur as long as a strong adhesive bond of the slit is finally achieved. Allowing additional cooling of the adhesive prior to coverage with the film can reduce buckling further, however, minor buckling due to temperature conditions have not caused problems, as any buckling is very localized.

Pressure sensitive hot melt adhesives, when spray-applied to the product walls in the manner shown herein, have proven very effective, however, it is possible to use two different adhesive combinations which, when brought together, react and form a strong closure. In this embodiment, two separate spray heads would be used, one for spraying each of the components. When the walls are finally brought together, there is very strong adhesion of each of the components to the cell walls, as discussed above, as well as a very strong bond of the two components to each other.

It has also been found valuable to use a spray head having a single spray jet which is driven in a swirl-like pattern to achieve the coverage. It has been found that applying adhesive to both walls gives excellent adhesion, however, in less demanding applications, the adhesive could be applied to one wall only. Applying adhesive to both walls is preferred. The adhesive can also be directly applied, if desired.

Although various preferred embodiments of the present invention have been described herein in detail, it will be appreciated by those skilled in the art, that variations may be made thereto without departing from the scope of the appended claims.

## Claims

1. An in-line method of producing pipe insulation having a longitudinal slit therein with an applied pressure sensitive adhesive located for adhesively bonding opposed walls of the pipe insulation located either side of said slit, and a removable release film for temporarily protecting the applied adhesive layer, said method comprising extruding foamed pipe insulation which is subject to substantial post extrusion shrinkage, partially cooling the pipe insulation to allow handling thereof, and subsequently forming a longitudinal slit by means of which the pipe insulation in its final application may be forced over a pipe to sleeve the pipe; spreading the slit pipe insulation to expose said opposed walls of the pipe insulation either side of the slit, applying a pressure sensitive adhesive to at least one of the exposed walls, and applying a removable release film to said foamed pipe insulation to cover said pressure sensitive adhesive while said pipe insulation is still subject to post extrusion shrinkage.

2. An in-line method of producing pipe insulation as claimed in claim 1 including the step of tensioning the removable release film under a low tension force to cause an elongation thereof to compensate for the post extrusion shrinkage of the pipe insulation prior to applying said releasable film.

3. An in-line method of producing pipe insulation as claimed in claim 1 wherein said pressure sensitive adhesive is spray-applied to the pipe insulation.

4. An in-line method of producing pipe insulation as claimed in claim 3 wherein said pipe insulation is slit to expose cell formations on said opposed walls and said pressure sensitive adhesive is a hot melt adhesive and is applied at a temperature about the melting temperature of the foamed article to said exposed cell formations of the foamed pipe insulation.

5. An in-line method of producing pipe insulation as claimed in claim 4 wherein the pressure sensitive hot melt adhesive is initially at a temperature above the melt temperature of the foamed pipe insulation and is sprayed on the opposed walls through an air gap which cools the adhesive sufficiently such that it contacts the pipe insulation with an evenly distributed spray at a temperature about the melt temperature of the pipe insulation.

6. An in-line method of producing pipe insulation as claimed in claim 5 wherein said pressure sensitive hot melt adhesive is applied to both of said opposed walls.

7. An in-line method of producing pipe insulation as claimed in claim 6 wherein the release film prior to application is in a V shape and is located between said opposed walls which are forced together against the V section, and wherein said V section is subsequently split into two sections.

8. An in-line method of producing pipe insulation as claimed in claim 7 wherein said longitudinal slit is formed by cutting the pipe insulation in a nonradial manner to increase the width of the exposed wall sections and improve adhesion properties of the final product.

9. An in-line method of producing pipe insulation as claimed in claim 7 wherein said slit is formed in a tangential manner relative to the inner wall of the pipe insulation.

10. An in-line method of producing pipe insulation as claimed in claim 5 wherein said pressure sensitive hot melt adhesive is applied to leave a portion of the opposed walls adjacent an inner peripheral surface free of adhesive.

11. Pipe insulation of an extruded low density polyethylene foamed material comprising a tubular body with a hollow central cavity running the length thereof, a slit in the length of the article to allow a pipe to be forced through the slit in the pipe insulation and into the hollow cavity; said slit being located between opposed walls of the pipe insulation and including a hot melt pressure sensitive adhesive covering at least one of said opposed walls with a releasable film covering said adhesive and wherein said pipe insulation is produced by the in-line method as defined in any of claims 1 through 10 and the releasable film has limited buckling following post extrusion shrinkage.

## Patentansprüche

1. In einer Reihe ablaufendes Verfahren zum Herstellen einer Rohrisolation, die einen Längsschlitz aufweist, auf dem ein druckempfindlicher Klebstoff an einer Stelle aufgebracht ist, daß gegenüberliegende Wände der Rohrisolation, die zu beiden Seiten des Schlitzes liegen, durch Verklebung miteinander verbunden werden können, und die einen lösbaren Trennfilm für den vorübergehenden Schutz der aufgebrachten Klebstoffschicht aufweist, wobei das Verfahren umfaßt: Extrudieren geschäumter Rohrisolation, die einer erheblichen Schrumpfung nach der Extrusion unterworfen ist, Teilabkühlen der Rohrisolation, um deren Handhabung zu ermöglichen, und anschließendes Ausbilden eines Längsschlitzes, vermittels dem die Rohrisolation bei ihrer endgültigen Anbringung über ein Rohr gedrückt werden kann, um das Rohr zu umschließen; Aufspreizen der geschlitzten Rohrisolation, um die einander gegenüberliegenden Wände der Rohrisolation zu beiden Seiten des Schlitzes freizulegen, Aufbringen eines druckempfindlichen Klebstoffs auf wenigstens eine der freigelegten Wände und Aufbringen eines lösbaren Trennfilms auf die geschäumte Rohrisolation, um den druckempfindlichen Klebstoff abzudecken, während die Rohrisolation noch der Schrumpfung nach Extrusion unterworfen ist.

2. In einer Reihe ablaufendes Verfahren zum Herstellen einer Rohrisolation nach Anspruch 1, enthaltend den Schritt des Spannens des lösbaren Trennfilms mit einer niedrigen Spannkraft, um eine Längung desselben zu bewirken, um der Schrumpfung nach Extrusion der Rohrisolation vor dem Aufbringen des Trennfilms Rechnung zu tragen.

3. In einer Reihe ablaufendes Verfahren zum Herstellen einer Rohrisolation nach Anspruch 1, bei dem der druckempfindliche Klebstoff durch Aufsprühen auf die Rohrisolation aufgebracht wird.

4. In einer Reihe ablaufendes Verfahren zum Herstellen einer Rohrisolation nach Anspruch 3, bei dem die Rohrisolation geschlitzt wird, um Zellenformationen auf den gegenüberliegenden Wänden freizulegen, und der drckempfindliche Klebstoff ein Heißschmelzkleber ist und bei einer Temperatur um den Schmelzpunkt des geschäumten Artikels auf die freiliegenden Zellenformationen der geschäumten Rohrisolation aufgebracht wird.

5. In einer Reihe ablaufendes Verfahren zum Herstellen einer Rohrisolation nach Anspruch 4, bei dem der druckempfindliche Heißschmelzkleber anfänglich auf einer Temperatur oberhalb des Schmelzpunktes der geschäumten Rohrisolation ist und auf die gegenüberliegenden Wände über einen Luftspalt hinweg aufgesprüht wird, der den Kleber ausreichend abkühlt, daß er die Rohrisolation in einem gleichmäßig verteilten Sprühstrahl bei einer Temperatur berührt, die um den Schmelzpunkt der Rohrisolation liegt.

6. In einer Reihe ablaufendes Verfahren zum Herstellen einer Rohrisolation nach Anspruch 5, bei dem der druckempfindliche Heißschmelzkleber auf beide einander gegenüberliegenden Wände aufgebracht wird.

7. In einer Reihe ablaufendes Verfahren zum Herstellen einer Rohrisolation nach Anspruch 6, bei dem der Trennfilm vor der Aufbringung in einer V-Form vorliegt und zwischen die gegenüberliegenden Wände gebracht wird, die gegen den V-Abschnitt gedrückt werden, wobei der V-Abschnitt anschließend in zwei Abschnitte aufgespalten wird.

8. In einer Reihe ablaufendes Verfahren zum Herstellen einer Rohrisolation nach Anspruch 7, bei dem der Längsschnitt durch Schneiden der Rohrisolation in einer nicht-radialen Weisen ausgeführt wird, um die Breite der freigelegten Wandabschnitte zu vergrößern und die Klebeigenschaften des Endproduktes zu verbessern.

9. In einer Reihe ablaufendes Verfahren zum Herstellen einer Rohrisolation nach Anspruch 7, bei dem der Schlitz in einer tangentialen Weise bezüglich der Innenwand der Rohrisolation ausgebildet wird.

10. In einer Reihe ablaufendes Verfahren zum Herstellen einer Rohrisolation nach Anspruch 5, bei dem der druckempfindliche Heißschmelzkleber so aufgebracht wird, daß er einen Abschnitt der gegenüberliegenden Wände benachbart einer inneren Umfangsfläche frei von Klebstoff bleibt.

11. Rohrisolation aus einem extrudierten Polyethylenschaummaterial niedriger Dichte, bestehend aus einem tubusförmigem Körper mit einem hohlen Innenraum in der Mitte, der in Längsrichtung verläuft, einem Schlitz längs des Gegenstandes, um zu ermöglichen, ein Rohr durch den Schlitz in der Rohrisolation und in den hohlen Innenraum zu drücken, wobei dieser Schlitz zwischen gegenüberliegenden Wänden der Rohrisolation liegt und einen druckempfindlichen Heißschmelzkleber enthält, der wenigstens eine der gegenüberliegenden Wände bedeckt, wobei ein lösbarer Film den Kleber bedeckt und die Rohrisolation nach dem in einer Reihe ablaufendes Verfahren zum Herstellen einer Rohrisolation nach einem der Ansprüche 1 bis 10 erzeugt ist und der lösbare Film bei der Schrumpfung nach Extrusion eine begrenzte Welligkeit aufweist.

## Revendications

1. Procédé de production en ligne d'une isolation pour tuyau dans laquelle est ménagée une fente longitudinale comportant, appliquée, une substance auto-adhésive disposée de manière à relier d'une manière adhésive des parois se faisant face de l'isolation pour tuyau qui sont situées de part et d'autre de ladite fente, et un film antiadhésif servant à protéger provisoirement la couche de substance adhésive appliquée, ledit procédé comprenant l'extrusion d'une isolation pour tuyau obtenue par formation de matière cellulaire et sujette à un retrait post-extrusion notable, un refroidissement partiel de l'isolation pour tuyau de manière à permettre sa manipulation, et, ensuite, la formation d'une fente longitudinale au moyen de laquelle il est possible de disposer d'une manière forcée l'isolation pour tuyau, lors de son application finale, pardessus un tuyau de façon à gainer le tuyau, l'écartement de l'isolation pour tuyau fendue de manière à exposer les parois se faisant face de l'isolation pour tuyau situées de part et d'autre de la fente, l'application d'une substance auto-adhésive sur au moins l'une des parois exposées et l'application d'un film antiadhésif sur l'isolation pour tuyau obtenue par formation de matière cellulaire alors que ladite isolation pour tuyau est encore sujette au retrait post-extrusion.

2. Procédé de production en ligne d'une isolation pour tuyau tel que revendiqué à la revendication 1, comportant l'étape de mise sous tension, sous une faible force de tension, du film antiadhésif pouvant être retiré, de façon à provoquer un allongement de celui-ci afin de compenser le retrait post-extrusion de l'isolation pour tuyau, avant l'application dudit film antiadhésif.

3. Procédé de production en ligne d'une isolation pour tuyau tel que revendiqué à la revendication 1, selon lequel la substance auto-adhésive est appliquée par pulvérisation sur l'isolation pour tuyau.

4. Procédé de production en ligne d'une isolation pour tuyau tel que revendiqué à la revendication 3, selon lequel l'isolation pour tuyau est fendue de manière à exposer des formations cellulaires sur lesdites parois se faisant face et ladite substance auto-adhésive est une substance adhésive thermofusible et est appliquée sur lesdites formations cellulaires exposées de l'isolation pour tuyau obtenue par formation de matière cellulaire, à une température approximativement égale à la température de fusion de l'article obtenu par formation de matière cellulaire.

5. Procédé de production en ligne d'une isolation pour tuyau tel que revendiqué à la revendication 4, selon lequel la substance auto-adhésive thermofusible est initialement à une température supérieure à la température de fusion de l'isolation pour tuyau obtenue par formation de matière cellulaire et est pulvérisée sur les parois se faisant face, en traversant un espace d'air qui refroidit la substance adhésive suffisamment pour qu'elle vienne au contact de l'isolation pour tuyau sous forme d'une pulvérisation uniformément répartie, à une température approximativement égale à la température de fusion de l'isolation pour tuyau.

6. Procédé de production en ligne d'une isolation pour tuyau tel que revendiqué à la revendication 5, selon lequel ladite substance auto-adhésive thermofusible est appliquée sur l'une et l'autre des parois se faisant face.

7. Procédé de production en ligne d'une isolation pour tuyau tel que revendiqué à la revendication 6, selon lequel le film antiadhésif est, avant application, en forme de V et est placé entre lesdites parois se faisant face qui sont rapprochées d'une manière forcée en appui sur la section en V et selon lequel ladite section en V est ensuite coupée en deux sections.

8. Procédé de production en ligne d'une isolation pour tuyau tel que revendiqué à la revendication 7, selon lequel ladite fente longitudinale est formée en coupant l'isolation pour tuyau d'une manière non radiale afin d'accroître la largeur des sections de paroi exposées et d'améliorer les propriétés d'adhérence du produit final.

9. Procédé de production en ligne d'une isolation pour tuyau tel que revendiqué à la revendication 7, selon lequel la fente est formée d'une manière tangentielle par rapport à la paroi intérieure de l'isolation pour tuyau.

10. Procédé de production en ligne d'une isolation pour tuyau tel que revendiqué à la revendication 5, selon lequel la substance auto-adhésive thermofusible est appliquée de manière à laisser dépourvue de substance adhésive une partie des parois se faisant face qui est adjacente à une surface périphérique intérieure.

11. Isolation pour tuyau en une matière cellulaire du type polyéthylène basse densité extrudée, comprenant un corps tubulaire comportant une cavité centrale s'étendant sur sa longueur, une fente située suivant la longueur de l'article afin de permettre de faire passer d'une manière forcée un tuyau à travers la fente située dans l'isolation pour tuyau et jusque dans la cavité ; ladite fente étant située entre des parois se faisant face de l'isolation pour tuyau et comportant une substance auto-adhésive thermofusible couvrant au moins l'une desdites parois se faisant face, avec un film antiadhésif couvrant ladite substance adhésive, et dans laquelle ladite isolation pour tuyau est produite par le procédé en ligne tel que défini à l'une quelconque des revendications 1 à 10 et le film antiadhésif présente un flambement limité à la suite d'un retrait post-extrusion.
